# EUROPEAN PATENT SPECIFICATION

(11) **EP 0 512 861 B1**
(45) Date of publication and mention of the grant of the patent: **10.02.1999**
(21) Application number: 92304173.5
(22) Date of filing: 08.05.1992
(51) Int. Cl.: H04N 7/01, H04N 11/20

(54) **Color video signal standard conversion apparatus**
Vorrichtung zur Farbnormumsetzung eines Videosignals
Dispositif convertisseur de standard des signaux vidéo en couleurs

(30) Priority: 09.05.1991 JP 104439/91
(43) Date of publication of application: 11.11.1992
(73) Proprietor: NINTENDO CO. LIMITED, Higashiyama-ku Kyoto (JP)
(72) Inventor: Nakagawa, Katsuya, c/o Nintendo Co. Ltd, Higashiyama-ku, Kyoto (JP); Nagano, Masakazu, c/o Nintendo Co. Ltd, Higashiyama-ku, Kyoto (JP); Higashiyama, Jun, c/o Nintendo Co. Ltd, Higashiyama-ku, Kyoto (JP)
(74) Representative: Smith, Martin Stanley

(56) References cited:
- EP-A- 0 420 994
- GB-A- 2 197 767
- PATENT ABSTRACTS OF JAPAN vol. 8, no. 78 (E-237) (1515) 10 April 1984 & JP-A-58 223 983 (SHARP K.K.) 26 December 1983
- IEEE TRANSACTIONS ON CONSUMER ELECTRONICS, vol.36, no.3, August 1990, NEW YORK US pages 572 - 579 TOMITA ET AL. 'VIDEO TAPE RECORDER WITH DIGITAL TELEVISION STANDARDS CONVERTER'
- PATENT ABSTRACTS OF JAPAN vol. 13, no. 216 (E-760) 19 May 1989 & JP-A-01 029 078 (NEC CORP) 31 January 1989

## Description

### BACKGROUND OF THE INVENTION

### Field of the Invention

The present invention relates to a color video signal conversion apparatus. More specifically, the present invention relates to a color video signal conversion apparatus which converts a color video signal of an NTSC standard which is output from a video game machine, for example, into a color video signal of a PAL standard (or a SECAM standard).

### Description of the Prior Art

In an NTSC standard, a frequency of a color subcarrier is 3.58 MHz, and color information (hue) is represented by a relative phase with respect to a color burst signal normally having 0 degree. On the other hand, in a PAL standard, a hue is also represented by a relative phase with respect to a color burst signal, but a frequency of a color subcarrier is 4.43 MHz and a phase of the color burst signal is inverted on every other line.

Thus, since the frequencies of the color subcarrier and color modulation systems are different from each other between the NTSC standard and the PAL standard, it is impossible to display an NTSC color.video signal which is output from such a video game machine disclosed in United States Patent No. 4,918,436 issued on April 17, 1990, for example, on a television monitor a PAL system.

On the other hand, for example, in Japanese Patent Laying-Open No. 63-269880 laid-open on November 8, 1988, there is disclosed a system conversion apparatus by which an NTSC color video signal can be converted into a PAL color video signal. In this prior art, an NTSC chrominance signal is derived by a Y/C separator at a transmitting party, and the NTSC chrominance signal is decoded by a decoder so as to be stored in a frame memory. Phase data read from the frame memory is transmitted to a receiving party, and received data is stored in a further frame memory at the receiving party. Then, the data stored in the frame memory at the receiving party is read and applied to an encoder. At this time, by operating the frame memory at the transmitting party and the frame memory at the receiving party at different clock frequencies, a difference of the frequencies of the above described color subcarriers is dealt with.

In the above described prior art, it is necessary to provide frame memories each having a large capacity at both parties, and a high speed A/D converter is needed at the transmitting party and a high speed D/A converter is needed at the receiving party, and therefore, a cost thereof was very high. Therefore, this prior art is not suitable for a video game machine for home use which must be cheap.

### SUMMARY OF THE INVENTION

Therefore, a principal object of the present invention is to provide a color video signal conversion apparatus with a low cost.

In one aspect of the present invention is a color video signal conversion apparatus which converts a first color video signal in which a hue is dealt with as a phase of a first chrominance signal with respect to a first color burst signal into a second color video signal in which a hue is dealt with as a phase of a second chrominance signal with respect to a second color burst signal, said color video signal conversion apparatus comprising: first clock generating means for generating a first clock having a frequency which is an integer multiple of the burst frequency of the first chrominance signal included in the first color video signal; second clock generating means for generating a second clock having a frequency which is an integer multiple of the burst frequency of the second chrominance signal included in the second color video signal; phase detecting means for detecting a phase of the first chrominance signal with respect to the first color burst signal included in the first color video signal on the basis of the first clock to output a first color code representing a detected phase; code converting means for converting the first color code from the phase detecting means into a second color code for the second color video signal; and chrominance signal generating means for generating the second chrominance signal of the second color video signal on the basis of the second clock and the second color code.

In a detailed embodiment of the present invention is a color video signal conversion apparatus comprising: an input end for receiving a first color video signal from first color video signal generating means which generates the first color video signal including a synchronization signal, first chrominance signal and luminance signal; synchronization signal deriving means for deriving the synchronization signal from the first color video signal input to the input end; chrominance signal deriving means for deriving the first chrominance signal from the first color video signal input to the input end; chrominance signal converting means for converting the first chrominance signal output from the chrominance signal deriving means into a second chrominance signal which is to be included in a second color video signal; synchronization signal generating means for generating a further synchronization signal which is to be included in the second color video signal on the basis of the synchronization signal output from the synchronization signal deriving means; synthesizing means for synthesizing the further synchronization signal output from the synchronization signal generating means and the second chrominance signal output from the chrominance signal converting means; and stopping means for stopping the first color video signal from the color video signal generating means from being input to the input end during a time period corresponding to a difference between a field period of the first color video signal and a field period of the second color video signal.

A first color video signal according to an NTSC standard is input to the input end from a video game machine for home use, for example, and an NTSC chrominance signal (first chrominance signal) is derived by a chrominance signal/luminance signal separation circuit. The first chrominance signal is applied to a color decoder. The color decoder includes counter or shift register means which operates according to the first clock. A phase of the first chrominance signal is detected by the counter or shift register means, thereby to obtain a first color code which is equal to a detected phase. The first color code from the decoder is converted into a second color code for a PAL standard, for example, by a code converter. When the second color code is applied to a PAL encoder, the PAL encoder outputs a PAL chrominance signal (second chrominance signal) on the basis of the second clock and the second color code. Then, the second chrominance signal is synthesized with the original luminance signal which is separated by the chrominance signal/luminance signal separation circuit, and a synchronization signal for the second color video signal is added to a synthesized signal by synchronization signal synthesizing means. Thus, the second color video signal is obtainable.

In addition, a field frequency of the NTSC standard is 60 MHz, but a field frequency of the PAL standard is 50 MHz, generally. Therefore, it is impossible to use a vertical synchronization signal of the NTSC standard as a vertical synchronization signal of the PAL standard, as it is. Therefore, the synchronization signal generating means generates a PAL synchronization signal on the basis of an NTSC synchronization signal so as to apply the PAL synchronization signal to the synchronization signal synthesizing means.

Furthermore, in order to effectively deal with a difference between the above described field frequencies, that is, a difference between field periods, during a time period corresponding to the difference between the field periods, the first color video signal is stopped from being input to the input end so as to forcedly set or form a blanking period. Concretely, a clock for the first color video signal generating means, that is, a PPU of a video game machine, for example, is stopped. However, in an embodiment described later, during the forced blanking period, a clock is applied to the PPU in response to an accessing signal from a CPU such that the CPU can access the PPU as necessary.

According to the present invention, since the hue of the chrominance signal of the first color television system is decoded as the first color code which is converted into the second color code suitable for the second color television system, and the chrominance signal of the second color television system is generated according to the second color code, it is not necessary to provide frame memories each having a large capacity, a high speed A/D converter and a high speed D/A converter all of which were needed in the prior art previously described. Therefore, a color video signal conversion apparatus becomes very cheap. Accordingly, the present invention is suitable for a video signal conversion apparatus for a video game machine for home use.

In a detailed embodiment if there is a difference between a field period of the first color television system and a field period of the second color television system, by forcedly setting a time period corresponding to the difference as a blanking period, a synchronization is not disturbed.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a block diagram showing a conversion circuit included in one embodiment of an NTSC/PAL conversion device according to the present invention;
Figure 2 is a block diagram showing a video game machine which constitutes one embodiment according to the present invention;
Figure 3 is a block diagram showing the NTSC/PAL conversion device shown in Figure 2;
Figure 4 is a block diagram showing a color decoder included in the conversion circuit shown in Figure 1;
Figure 5 is a timing chart showing an operation of the color decoder shown in Figure 4;
Figure 6 is an illustrative view showing phases of color burst signals of an NTSC standard and a PAL standard;
Figure 7 is an illustrative view showing a phase of a color signal outputted from a PAL encoder shown in Figure 1;
Figure 8 is a block diagram showing the PAL encoder shown in Figure 1;
Figure 9 is a circuit diagram showing a chrominance signal/luminance signal synthesizing circuit, a synchronization signal synthesizing circuit, and associated portions;
Figure 10 is an illustrative views showing a forced blanking period and respective signals TSS, TSE and Vsync' in converting a color video signal of the NTSC standard into a PAL color video signal of 50 Hz;
Figure 11 is a block diagram showing a synchronization signal processing circuit shown in Figure 3;
Figure 12 is a block diagram showing a major portion of a PPU stop control circuit shown in Figure 3;
Figure 13 is a timing chart showing an operation of the PPU stop control circuit; and
Figure 14 is a waveform chart showing a PAL color video signal output from the NTSC/PAL conversion circuit shown in Figure 3.

### DETAILED DESCRIPTION OF THE PREFERRED EMBODIMENTS

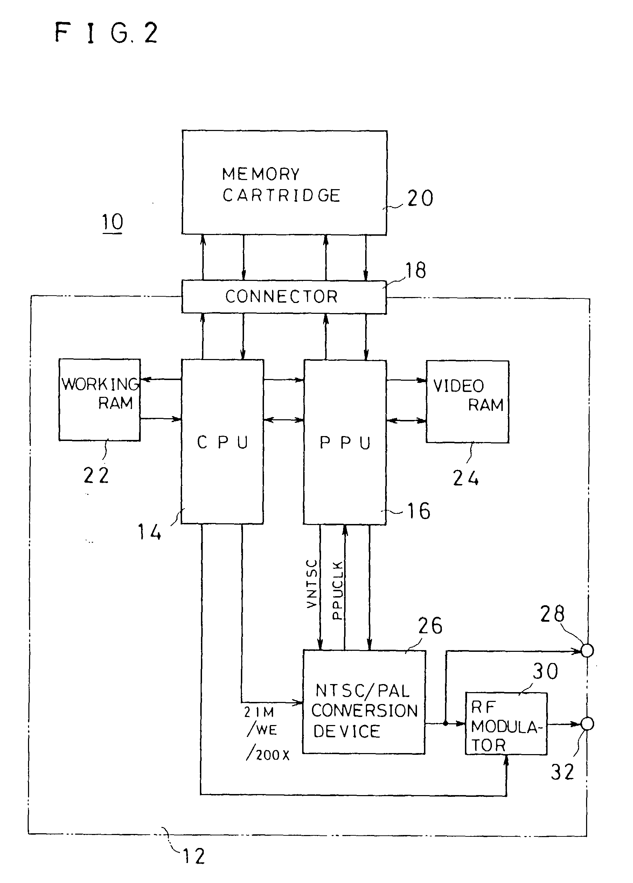

In Figure 2, a whole block diagram of a video game machine for home use is shown, and hereinafter, an embodiment in which the present invention is applied to such a video game machine for home use will be described. However, it is to be noted in advance that the present invention can be applied to a system for converting a color video signal of an NTSC standard output from not only such a video game machine but also other arbitrary device into a color video signal of PAL standard (or a SECAM standard).

A video game machine 10 shown in Figure 2 includes a body 12 in which a CPU (central processing unit) 14 and a PPU (picture processing unit) 16 are provided. A memory cartridge 20 is loaded to the CPU 14 and the PPU 16, that is, the body 12 through a connector 18. Although not shown, in the memory cartridge 20, a program memory for storing a program necessary for execution of a game, a character memory for storing graphic data (dot data) for displaying characters of a still picture (background picture) and a moving picture (object) for the game, and etc. are provided.

A working RAM 22 is connected to the CPU 14, and a video RAM 24 is connected to the PPU 16. The CPU 14 reads a game program loaded from the program memory of the memory cartridge 20 through the connector 18 so as to store into the working RAM 22. Then, the PPU 16 stores the character data read from the character memory of the memory cartridge 20 in the video RAM 24. The PPU 16 reads the graphic data from the video RAM 24 under the control of the CPU 14 according to the game program so as to convert the same into a composite color video signal VNTSC of an NTSC standard. However, in this embodiment shown, the composite color video signal is output as a base band signal which is not modulated.

The composite color video signal VNTSC from the above described PPU 16 is applied to an NTSC/PAL conversion device 26. A clock signal 21M is applied to the NTSC/PAL conversion device 26. The clock signal 21M has a frequency of 21.31250 MHz concretely, which is obtained from a basic oscillator which becomes a base of a system clock for the CPU 14 and the PPU 16. To the NTSC/PAL conversion device 26, signals /WE and /200X are further applied from the CPU 14. In addition, please note that a symbol "/" represents negative logics in this specification. The signal /WE is a signal which becomes a low level when the CPU 14 accesses the PPU 16 for writing, and the signal /200X is a signal which is obtained when the address "200X" of the PPU 16 is decoded, and it is represented that the CPU 14 accesses the PPU 16 when the signal is at a low level. As described in detail, the NTSC/PAL conversion device 26 converts the composite color video signal VNTSC from the PPU 16 into a composite color video signal VPAL of a PAL standard and outputs the same. The PAL composite color video signal VPAL as it is can be output as a base band signal from an output terminal 28. However, the PAL composite color video signal VPAL may be applied to an RF modulator 30 together with a sound signal from the CPU 14 so as to be converted into a composite color television signal of a PAL standard by the RF modulator 30. The PAL composite color television signal may be output at a terminal 32.

In addition, only the NTSC/PAL conversion device 26 may be constructed an external circuit separated from the body 12, or only the RF modulator 30 may be constructed as an external circuit separated from the body 12, or only both the NTSC/PAL conversion device 26 and the RF modulator 30 may be constructed as an external circuit which is incorporated in a single housing and separated from the body 12.

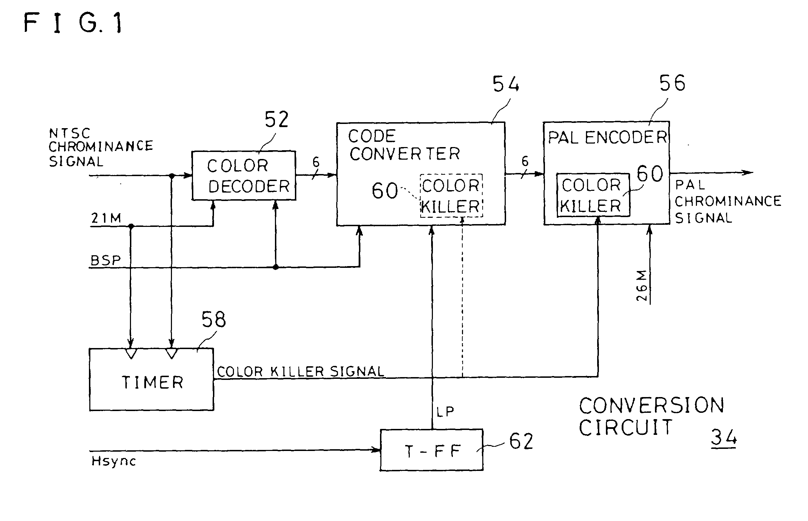

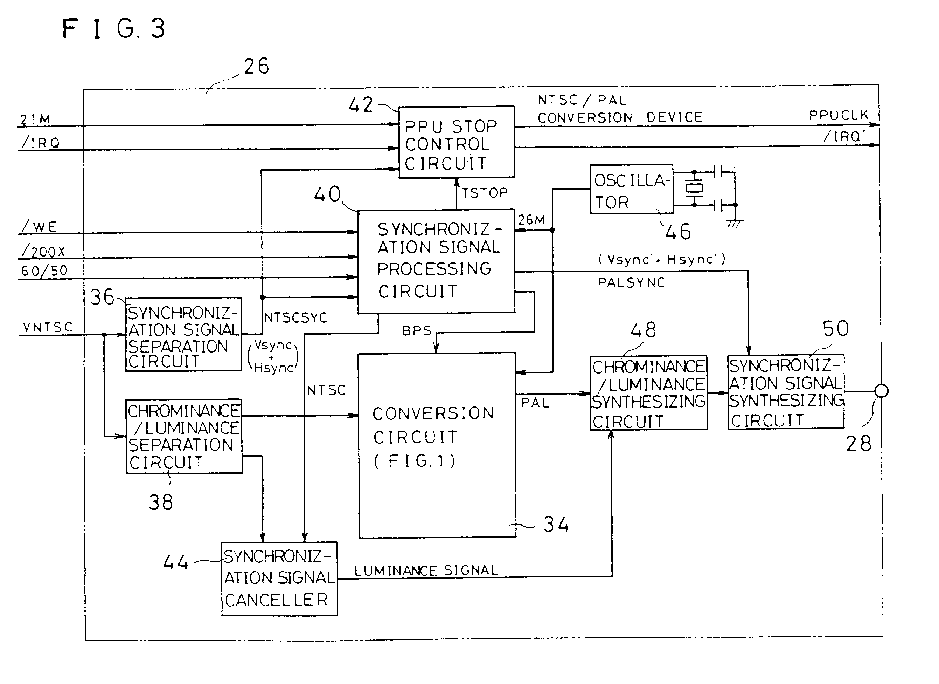

With reference to Figure 3, the NTSC/PAL conversion device 26 shown in Figure 2 includes a conversion circuit 34 which is shown in Figure 1 in detail. The composite color video signal VNTSC of the NTSC standard which is output from the PPU 16 (Figure 2) is applied to a synchronization separation circuit 36 and a chrominance signal/luminance signal separation circuit 38. The synchronization separation circuit 36 specifically includes a circuit for separating a synchronization signal, which outputs a composite synchronization signal NTSCSYNC (horizontal synchronization signal Hsync + vertical synchronization signal Vsync) which is converted into a digital level. The composite synchronization signal NTSCSYNC is applied to a synchronization signal processing circuit 40 and a PPU stop control circuit 42.

In general, a field frequency is 60 Hz in a case of an NTSC standard, and a field frequency is 50 Hz in a PAL standard. Therefore, in order to convert the NTSC color video signal of 60 Hz into the PAL color video signal of 50 Hz, it is necessary to forcedly set a blanking period such that the PAL color video signal is not output during a time period corresponding to a difference between the both field periods. For setting such a forced blanking period, in this embodiment shown, an operation of the PPU 16 (Figure 2) is stopped. Although described in detail later, the synchronization signal processing circuit 40 outputs a signal TSTOP for stopping the operation of the PPU 16 in response to a signal 60/50 which becomes a low level when the field frequency is 50 Hz. In addition, the synchronization signal processing circuit 40 converts the vertical synchronization signal Vsync and the horizontal synchronization signal Hsync of 60 Hz, that is, the NTSC composite synchronization signal NTSCSYNC into the vertical synchronization signal Vsync' and the horizontal synchronization signal Hsync' of 50 Hz, that is, the PAL composite synchronization signal PALSYNC. The PPU stop control circuit 42 is a circuit for stopping a clock signal PPUCLK for the PPU 16 in response to the signal TSTOP.

In addition, the chrominance signal/luminance signal separation circuit 38 outputs the chrominance signal of the NTSC standard, that is, the NTSC chrominance signal being converted into a digital level so as to apply to the above described conversion circuit 34. The chrominance signal/luminance signal separation circuit 38 applies a signal in which the vertical synchronization signal Vsync and the horizontal synchronization signal Hsync are superposed on the luminance signal to a synchronization signal canceller 44. The synchronization signal canceller 44 cancels the horizontal synchronization signal Hsync and the vertical synchronization signal Vsync so as to derive only the luminance signal.

An oscillator 46 outputs a clock signal 26M. The clock signal 26M has a frequency of 26.6017125 MHz specifically, and the frequency is selected as 6 times the PAL color subcarrier frequency 4.43 MHz. On the other hand, the clock signal 21M described above has a frequency selected as 6 times the NTSC color subcarrier frequency 3.58 MHz. The clock signal 26M from the oscillator 46 is applied to the conversion circuit 34 and the synchronization signal processing circuit 40. The synchronization signal processing circuit 40 applies a burst position signal BPS which becomes a high level at a position of a color burst signal.

Although described in detail later with reference to Figure 1, the conversion circuit 34 converts the NTSC chrominance signal into the PAL chrominance signal and applies the same to a chrominance signal/luminance signal synthesizing circuit 48. To this chrominance signal/luminance signal synthesizing circuit 48, the luminance signal output from the synchronization signal canceller 44 is further applied. Then, in the chrominance signal/luminance signal synthesizing circuit 48, the PAL chrominance signal and the original luminance signal are synthesized with each other, and a synthesized signal is applied in turn to the synchronization signal synthesizing circuit 50. To this synchronization signal synthesizing circuit 50, the PAL composite synchronization signal PALSYNC, that is, the horizontal synchronization signal Hsync' and the vertical synchronization signal Vsync' from the synchronization signal processing circuit 40 are applied. In the synchronization signal synthesizing circuit 50, the horizontal synchronization signal Hsync' and the vertical synchronization signal Vsync' are further superposed on the synthesized signal (PAL chrominance signal and the original luminance signal) output from the chrominance signal/luminance signal synthesizing circuit 48. Therefore, a composite color video signal of the PAL standard, that is, a second color video signal is applied from the synchronization signal synthesizing circuit 50 to the terminal 28. In addition, the second color video signal is a base band signal.

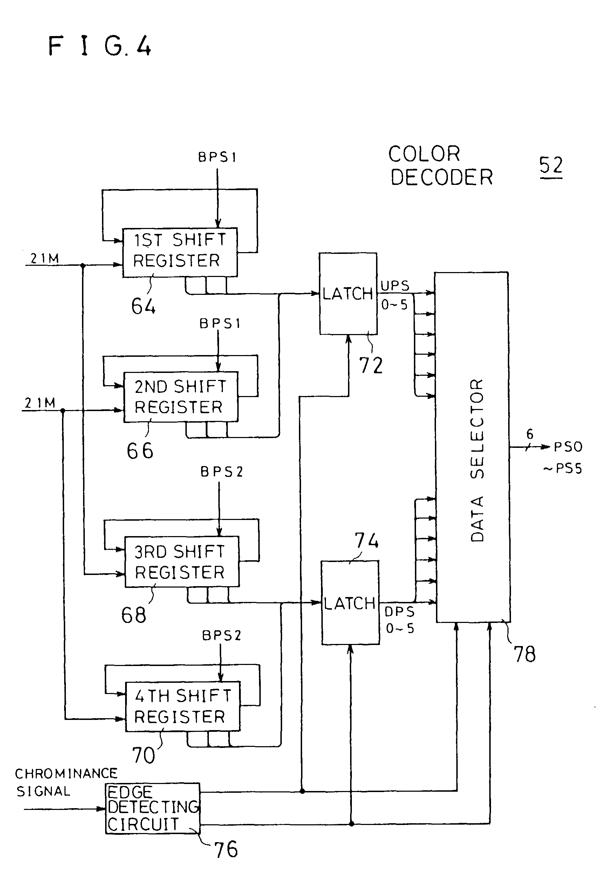

The conversion circuit 34 shown in detail in Figure 1 includes a color decoder 52 which receives the NTSC chrominance signal from the chrominance signal/luminance signal separation circuit 38 (Figure 3). The color decoder 52 has circuit structure shown in Figure 4 specifically, and outputs a first color code of 6 bits, that is, a code representing a relative phase with respect to the NTSC color burst signal on the basis of the NTSC chrominance signal. The first color code of 6 bits is applied to a code converter 54. The code converter 54 converts the NTSC color code into a PAL color code and applies a second color code 6 bits, that is, a code representing a relative phase with respect to the PAL color burst signal to a PAL encoder 56.

In addition, the NTSC chrominance signal from the chrominance signal/luminance signal separation circuit 38 (Figure 3) and the clock signal 21M are applied to a timer 58 which functions as a Watch Dog Timer. The timer 58 counts the clock signal 21M from a timing when no NTSC chrominance signal becomes to be input, and determines that a video signal being input thereto is a monochrome signal when there is no chrominance signal for a predetermined time period, for example, 300 nsec (= one cycle T of the chrominance signal x 8/6) so as to output a color killer signal of a low level. The color killer signal is applied to a color killer 60 included in the above described PAL encoder 56. The color killer 60 stops the PAL chrominance signal from being output from the PAL encoder 56 in response to the color killer signal.

In addition, no color signal may be resultingly included in the PAL chrominance signal, and therefore, the color killer 60 may be provided in the code converter 54 as shown by a dotted line in Figure 1 such that the first color code is not input thereto or the second color code is not output therefrom.

Furthermore, the horizontal synchronization signal Hsync is applied to a toggle flip-flop (T-FF) 62. The T-FF 62 applies a line determining signal LP which becomes alternately a high level or a low level every other horizontal synchronization signal Hsync to the code converter 54.

Now, with reference to Figure 4, the color decoder 52 included in the conversion circuit 34 will be described in detail.

In a television game machine "Family Computer" (registered trademark) or "Nintendo Entertainment System (NES)" (registered trademark) which is shown in Figure 2, and manufactured and sold by the same assignee as that of the present invention, color signals of 48 are generated by combining hues of 12 and brightness of 4 stages. However, since the brightness can be commonly used in both the NTSC standard and the PAL standard, in order to convert the NTSC color video signal into the PAL color video signal, only the hues of 12 may be converted. In order to decode such the hues of the NTSC chrominance signal, it may be considered that a color code representing a hue of the chrominance signal is obtained on the basis of count values at respective timings of a leading edge and a trailing edge of the chrominance signal by using a 12-nary counter which is synchronized with the color burst signal.

In addition, in this embodiment shown in Figure 4, a shift register is used instead of the above described 12-nary counter for decoding a such a color code, and data of 6 bits is used for representing 12 kinds of color code. That is, first, second, third and fourth shift registers 64, 66, 68 and 70 are used. Each of the first shift register 64 to the fourth shift register 70 is constructed as a presettable shift register of 6 bits. A signal BPS1 representing the leading edge of the burst position signal BPS which is given from the synchronization signal processing circuit 40 (Figure 3) is applied to each of the first and second shift registers 64 and 66 as a preset signal therefor. A signal BPS2 representing the trailing edge of the burst position signal BPS is applied to each of the third shift register 68 and the fourth shift register 70 as a preset signal therefor. On the other hand, the trailing edge of the clock signal 21M is applied to each of the first shift register 64 and the third shift register 68. The first and third shift registers 64 and 68 perform shift operations in response to a timing of the leading edge of the clock signal 21M, respectively. A trailing edge of the clock signal 21M is applied to each of the second shift register 66 and the fourth shift register 70. The second and fourth shift registers 66 and 70 perform shift operations in response to a timing of the trailing edge of the clock signal 21M, respectively. Then, data of 6 bits in total of lower 3 bits of the first shift register 64 and lower 3 bits of the second shift register 66 is applied to a latch 72. In addition, data of 6 bits in total of lower 3 bits of the third shift register 68 and lower 3 bits of the fourth shift register 70 is applied to a latch 74.

Furthermore, an edge detecting circuit 76 receives the NTSC chrominance signal and detects the leading edge and the trailing edge of the NTSC chrominance signal. The leading edge signal is applied to the latch 72 as a latch signal therefor, and the trailing edge signal is applied to the latch 74 as a latch signal therefor.

A reason why the color code is thus latched at both of the leading edge and the trailing edge of the NTSC chrominance signal is as follows. More specifically, in the video game machine of this embodiment shown in Figure 1, a dot clock is approximately 5 MHz which is obtained by frequency-dividing the original oscillation signal by 4, and the frequency of the NTSC color subcarrier is 3.58 MHz as mentioned above, and therefore, there is possibility that "Falling-off of the data" occurs if the color code is latched in response to only the leading edge of the chrominance signal. Therefore, by latching the color codes in response to both the leading edge and the trailing edge of the NTSC chrominance signal, the color code is latched at a frequency of 7.16 MHz in principle, and therefore, the above described falling-off of the data does not occur.

Furthermore, since the chrominance signal is level-shifted by the luminance signal, a duty ratio (a positive period/a negative period) of the chrominance signal is not constant. Therefore, in this embodiment shown, as shown in Figure 4, a set of the first shift register 64 and the second shift register 66 and a set of the third shift register 68 and the fourth shift register 70 are provided such that output data from each of the sets is latched by each of the two latches 72 and 74.

A color code UPS0-UPS5 of 6 bits from the above described latch 72 and data DPS0-DPS5 of 6 bits from the above described latch 74 are input to a data selector 78. The data selector 78 selects the data UPS0-UPS5 or DPS0-DPS5 in response to a level of the chrominance signal. That is, two outputs from the edge detecting circuit 76 are applied to the data selector 78. The data selector 78 selects an input from the latch 72 in response to a leading edge signal or an input from the latch 74 in response to a trailing edge signal so as to output a color code PS0-PS5 of the NTSC chrominance signal. The color code PS0-PS5 of 6 bits from the data selector 78 is applied to the code converter 54 as shown in Figure 2.

In addition, a timing when the color code PS0-PS5 is output from the selector 78 is not limited to the leading edge or the trailing edge of the chrominance signal as done in this embodiment, and the color code PS0-PS5 may be output in response to a peak point or a bottom point of the chrominance signal.

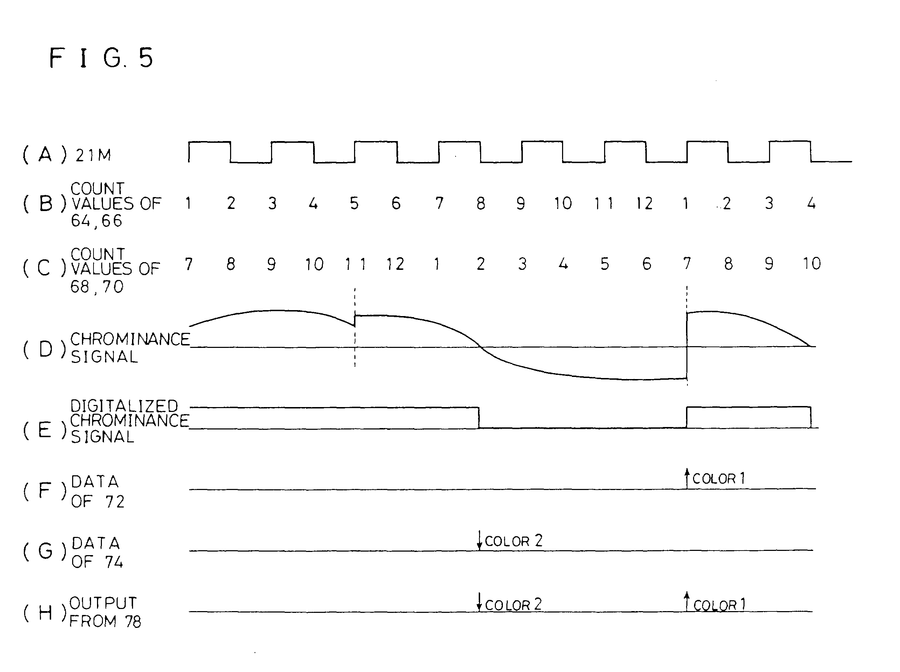

Now, with reference to Figure 5, a specific operation of the color decoder 52 shown in Figure 4 will be described. In response to the signal BPS1 representing the leading edge of the burst position signal, the data "111000" is preset and loaded in each of the first and second shift registers 64 and 66. In response to the signal BPS2 representing the trailing edge of the burst position signal, the data "000111" is preset and loaded in each of the third and fourth shift registers 68 and 70. Therefore, if the clock signal 21M as shown in Figure 5(A) is applied, a count value of each of the first shift register 64 and the second shift register 66 each of which counts the leading edge of the clock signal is changed as shown in Figure 5(B) and, a count value of each of the third shift register 68 and the fourth shift register each of which counts the trailing edge of the clock signal 21M is changed as shown in Figure 5(C).

On the other hand, if the NTSC chrominance signal as shown in Figure 5(D) is applied, it is converted into a digitalized chrominance signal as shown in Figure 5(E). Then, as shown in Figure 5(F), the latch 72 latches the count values of the first shift register 64 and the second shift register 66, that is, "1" in this example, in response to the leading edge of the digitalized chrominance signal. Furthermore, as shown in Figure 5(G), the latch 74 latches the count values of the third shift register 68 and the fourth shift register 70, that is, "2" in this example, in response to the trailing edge of the digitalized chrominance signal. The data (count values) latched in the latches 72 and 74 are representative of color codes. Therefore, color codes "2" and "1" are applied to the data selector 78 as shown in Figure 5(H). From the data selector 78, color codes "2", "1", ... are sequentially output to the code converter 54 (Figure 1).

If the color code is latched in response to only the leading edge of the chrominance signal, in the example shown in Figure 5, only the color code "1" of the latch 72 is output , the color code "2" as shown in Figure 5(G) is fallen-off.

Specifically, the code converter 54 shown in Figure 1 is constructed by a ROM or a gate array, and converts the first color code PS0-PS5 representing the hue of the NTSC chrominance signal into the second color code PS0'-PS5' representing the hue of the PAL chrominance signal as shown in the following tables 1 and 2.

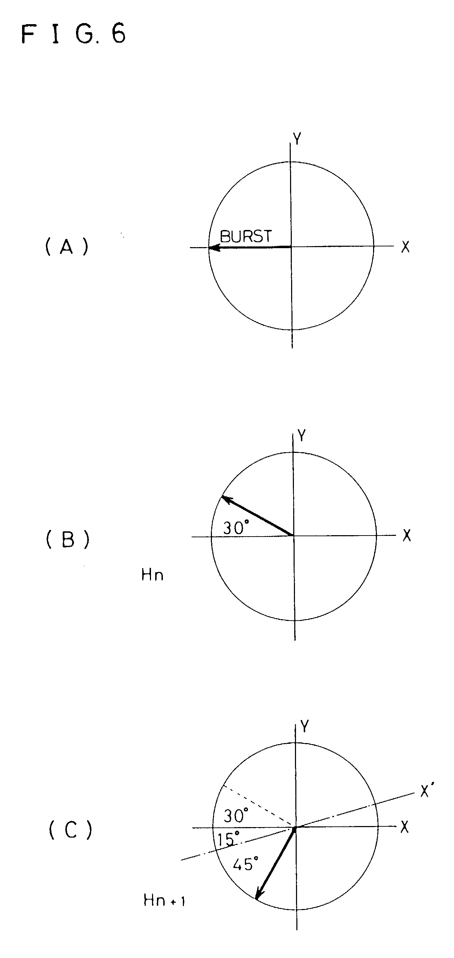

Now, with reference to Figure 5, a way that the color code PS0-PS5 of the NTSC standard is converted into the color code PS0'-PS5' of the PAL standard in the code converter 54 will be described. The color code PS0-PS5 is represented as a phase with respect to the color burst signal (X axis: 0 degree) in a case of the NTSC standard shown in Figure 6(A). Thus, in the NTSC standard, a phase difference with respect to the color burst signal of 0 degree that becomes a reference is used as a color code. However, as described above, in the PAL standard, a phase of the color burst signal is inverted every two lines. In a normal PAL color television broadcasting system, the phase of the color burst signal is decided at a position of 45 degrees with respect to the X axis in the n-th line Hₙ, and the phase of the color burst signal is decided at a position of -45 degrees with respect to the X axis in the (n+1)th line Hₙ₊₁. Therefore, a phase difference of the color burst signal between the both lines is set as 90 degrees.

In contrast, since the frequency of the first clock signal 21M of this embodiment shown is 3.58 MHz x 6, only a phase difference of 30 degrees can be distinguished or defined. Therefore, in this embodiment shown, the phase of the color burst signal in the case of the line Hₙ shown in Figure 6(B) is set as 30 degrees, and the phase of the color burst signal in the case of the line Hₙ₊₁ shown in Figure 6(C) is set as -60 degrees (300 degrees). As a result of such setting, the phase differences between the both color burst signals is maintained at 90 degrees.

Therefore, when the burst position signal BPS is a low level ("0"), the first color code PS0-PS5 is converted into the second color code PS0'-PS5' as shown in the table 1. The code converter 54 outputs the first color code PS0-PS5 as it is as the second color code PS0'-PS5' at the line Hₙ where an output of the T-FF 62 (Figure 1), that is, a line determination signal is a low level. The code converter outputs the second color code PS0'-PS5' which is obtained by shifting the first color code PS0-PS5 by 180 degrees at the line Hₙ₊₁ where the line determination signal is a high level.

**[TABLE 1]**

| LP | PS0 ∼ PS5 | PS0'∼ PS5' | enable signal | output | |
|---|---|---|---|---|---|
| | 012345 | 012345 | | PCR1 | PCR2 |
| 0 | 000000 | 000000 | PE0 | PC0 | PC0 |
| 0 | 100000 | 100000 | PE1 | PC1 | PC1 |
| 0 | 110000 | 110000 | PE2 | PC2 | PC2 |
| 0 | 111000 | 111000 | PE3 | PC3 | PC3 |
| 0 | 111100 | 111100 | PE4 | PC4 | PC4 |
| 0 | 111110 | 111110 | PE5 | PC5 | PC5 |
| 0 | 111111 | 111111 | PE6 | PC6 | PC6 |
| 0 | 011111 | 011111 | PE7 | PC7 | PC7 |
| 0 | 001111 | 001111 | PE8 | PC8 | PC8 |
| 0 | 000111 | 000111 | PE9 | PC9 | PC9 |
| 0 | 000011 | 000011 | PE10 | PC10 | PC10 |
| 0 | 000001 | 000001 | PE11 | PC11 | PC11 |
| 1 | 000000 | 000001 | PE11 | PC11 | PC11 |
| 1 | 100000 | 000011 | PE10 | PC10 | PC10 |
| 1 | 110000 | 000111 | PE9 | PC9 | PC9 |
| 1 | 111000 | 001111 | PE8 | PC8 | PC8 |
| 1 | 111100 | 011111 | PE7 | PC7 | PC7 |
| 1 | 111110 | 111111 | PE6 | PC6 | PC6 |
| 1 | 111111 | 111110 | PE5 | PC5 | PC5 |
| 1 | 011111 | 111100 | PE4 | PC4 | PC4 |
| 1 | 001111 | 111000 | PE3 | PC3 | PC3 |
| 1 | 000111 | 110000 | PE2 | PC2 | PC2 |
| 1 | 000011 | 100000 | PE1 | PC1 | PC1 |
| 1 | 000001 | 000000 | PE0 | PC0 | PC0 |

On the other hand, when the burst position signal BPS is a high level "1", the code converter 54 outputs the second color code PS0'-PS5' representing the phase of the color burst signal as shown in the table 2. As described above, the color burst signal is 30 degrees at the line Hₙ and the color burst signal is -60 degrees (300 degrees) at the line Hₙ₊₁, and therefore, the color code PS0'-PS5' of the color burst signal shown in the table 2 becomes a color code which is obtained by delaying the color code PS0'-PS5' by 30 degrees at a timing when the burst position signal BPS is a low level in the line Hₙ and a color code obtained by advancing the color code PS0'-PS5' by 60 degrees at the line Hₙ₊₁.

**[TABLE 2]**

| LP | PS0∼PS5 | PS0'∼ PS5' | enable signal | output | |
|---|---|---|---|---|---|
| | 012345 | 012345 | | PCR1 | PCR2 |
| 0 | 000000 | 100000 | PE0 | PC0 | 0 |
| 0 | 100000 | 110000 | PE1 | PC1 | 0 |
| 0 | 110000 | 111000 | PE2 | PC2 | 0 |
| 0 | 111000 | 111100 | PE3 | PC3 | 0 |
| 0 | 111100 | 111110 | PE4 | PC4 | 0 |
| 0 | 111110 | 111111 | PE5 | PC5 | 0 |
| 0 | 111111 | 011111 | PE6 | PC6 | 0 |
| 0 | 011111 | 001111 | PE7 | PC7 | 0 |
| 0 | 001111 | 000111 | PE8 | PC8 | 0 |
| 0 | 000111 | 000011 | PE9 | PC9 | 0 |
| 0 | 000011 | 000001 | PE10 | PC10 | 0 |
| 0 | 000001 | 000000 | PE11 | PC11 | 0 |
| 1 | 000000 | 100000 | PE11 | PC11 | 0 |
| 1 | 100000 | 000000 | PE10 | PC10 | 0 |
| 1 | 110000 | 000001 | PE9 | PC9 | 0 |
| 1 | 111000 | 000011 | PE8 | PC8 | 0 |
| 1 | 111100 | 000111 | PE7 | PC7 | 0 |
| 1 | 111110 | 001111 | PE6 | PC6 | 0 |
| 1 | 111111 | 011111 | PE5 | PC5 | 0 |
| 1 | 011111 | 111111 | PE4 | PC4 | 0 |
| 1 | 001111 | 111110 | PE3 | PC3 | 0 |
| 1 | 000111 | 111100 | PE2 | PC2 | 0 |
| 1 | 000011 | 111000 | PE1 | PC1 | 0 |
| 1 | 000001 | 110000 | PE0 | PC0 | 0 |

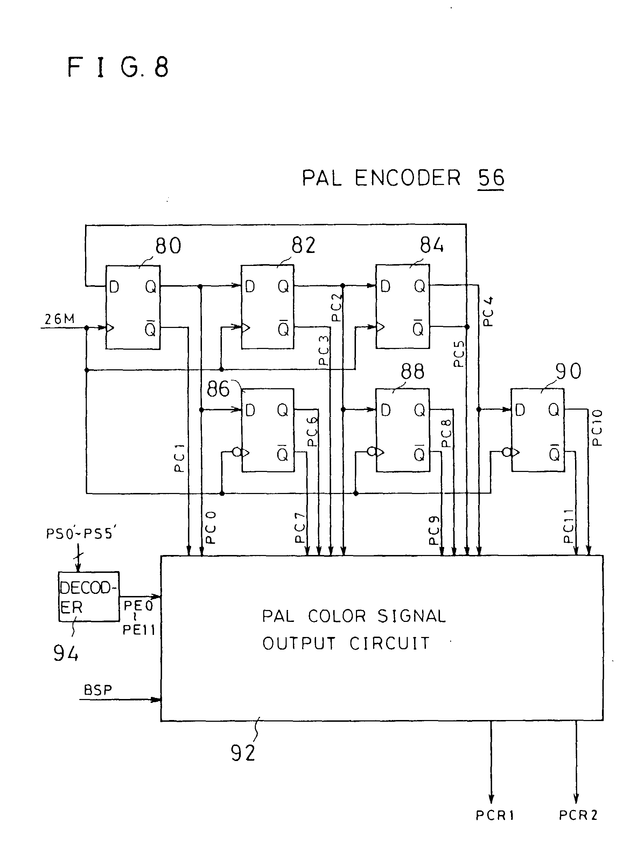

The PAL color code PS0'-PS5' thus output from the code converter-54 is applied to the PAL encoder 56. The PAL encoder 56 includes, as shown in detail in Figure 8, six D flip-flops (D-FF)'s 80, 82, 84, 86, 88 and 90. To the D-FF's 80, 82 and 84, the clock signal 26M is applied. To the D-FF's 86, 88 and 90, inversion of the clock signal 26M is applied. Therefore, the D-FF's 80-84 read-in data at a leading edge of the clock signal 26M, and the D-FF's 86-90 read-in data at a trailing edge of the clock signal 26M. Then, a Q output of the D-FF 80 is applied to a D input of each of the D-FF's 82 and 86 and further applied to a PAL color signal output circuit 92 as a PAL phase signal PC0. A /Q output of the D-FF 80 is applied to the PAL color signal output circuit 92 as a PAL phase signal PC1. A /Q output of the D-FF 82 is applied to not only each of a D input of the D-FF's 84 and 88 but also the PAL color signal output circuit 92 as a PAL phase signal PC2. A /Q output of the D-FF 82 is applied to the PAL color signal output circuit 92 as a PAL phase signal PC3. A /Q output of the D-FF 84 is applied to not only a D input of the D-FF 90 but also the PAL color signal output circuit 92 as a PAL phase signal PC4. A /Q output of the D-FF 84 is applied to the PAL color signal output circuit 92 as a PAL phase signal PC5 and a D input of the D-FF 80. Q outputs and /Q outputs of the D-FF's 86, 88 and 90 are applied to the PAL color signal output circuit 92 as PAL phase signals PC6, PC7, PC8, PC9, PC10 and PC11, respectively.

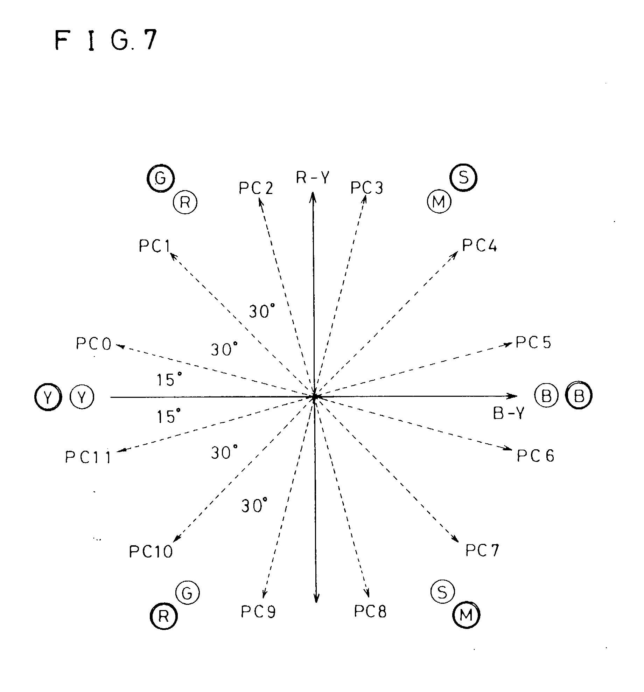

That is, the six D-FF's 80-90 constitute a frequency-divider for the clock signal 26M, and applies twelve phase signals PC0-PC11 each corresponding to each of twelve color codes as shown in Figure 7 to the PAL color signal output circuit 92. In addition, symbols Y (yellow), R (red), M (magenta), B (blue), S (cyan), and G (green) each of which is surrounded by a single circle in Figure 7 represent colors at a state where the line determination signal LP is a low level. Symbols surrounded by double circles in Figure 7 represent colors at a state where the line determination signal LP is a high level. Then, phase angles shown in Figure 7 are representative of standard values, respectively.

The PAL encoder 56 is provided with a decoder 94 which decodes the PAL color code PS0'-PS5' from the code converter 54 (Figure 1) and outputs enable signals PE0-PE11 shown in the table 1. The enable signals PE0-PE11 from the decoder 94 and the burst position signal BPS from the synchronization signal processing circuit 40 (Figure 3) are applied to the above described PAL color signal output circuit 92. Specifically, the PAL color signal output circuit 92 is constituted by a color encoder as disclosed in the previously cited United States Patent No. 4,918,434. The PAL color signal output circuit 92 selects any one of the phase signals PC0-PC11 in response to corresponding one of the enable signals PE0-PE11 output from the decoder 94 so as to output terminals PCR1 and PCR2. A PAL color signal is output at the terminal PCR1, and a signal obtained by subtracting the color burst signal from the PAL color signal is output at the terminal PCR2.

Thus, the NTSC chrominance signal is decoded as the first color code in the NTSC decoder 52, and the first color code is converted into the second color code corresponding thereto of the PAL standard by the code converter 54. In response to the second color code and the clock signal 26M, the PAL chrominance signal is output from the terminals PCR1 and PCR2 of the PAL encoder 56.

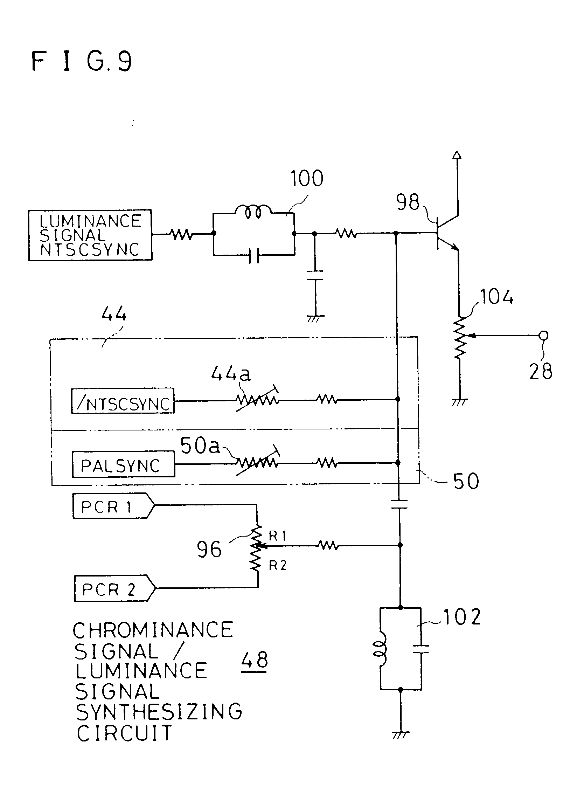

As shown in Figure 9, the terminals PCR1 and PCR2 are connected to both ends of a variable resister 96 included in the chrominance signal/luminance signal synthesizing circuit 48. An output from the variable resister 96 is input to a base of a transistor 98. To the base of the transistor 98, the luminance signal from the chrominance signal/luminance signal separation circuit (Figure 3) and the NTSC composite synthesized signal NTSCSYNC are further input through a NTSC chrominance signal block circuit 100. A 4.43 MHz trap circuit 102 is further connected between the base and the ground. Then, the PAL composite synchronization signal PALSYNC from the synchronization signal processing circuit 40 is applied to the synchronization signal synthesizing circuit 50. The PAL composite synchronization signal PALSYNC is applied to the base of the transistor 98 through a variable resister 50a. To the synchronization canceller 44, an inversion signal /NTSCSYNC of the NTSC composite synchronization signal (horizontal synchronization signal Hsync + vertical synchronization signal Vsync) from the synchronization signal separation circuit 36 is applied. The inversion signal /NTSCSYNC is applied in turn to the base of the transistor 98 via a variable resistor 44a. The variable resistors 50a and 44a are for adjusting amplitude levels of the PAL composite synchronization signal PALSYNC and the inversion signal /NTSCSYNC, respectively.

In such the chrominance signal/luminance signal synthesizing circuit 48 and the synchronization signal synthesizing circuit 50 as shown in Figure 9, to the base of the transistor 98, the luminance signal, the NTSC composite synchronization signal NTSCSYNC, the inversion signal /NTSCSYNC, the PAL composite synchronization signal PALSYNC, and the PAL chrominance signal from the terminals PCR1 and the PCR2 are applied. Therefore, the NTSC composite synchronization signal NTSCSYNC and the inversion signal /NTSCSYNC are canceled with each other, and accordingly, the NTSC composite synchronization signal NTSCSYNC is removed by the synchronization canceller 44. On the other hand, the PAL chrominance signal from the terminals PCR1 and PCR2 is mixed with the luminance signal. At this time, by suitably adjusting resistance values R1 and R2 of the variable resistor 96, it is possible to set amplitude levels of the PAL chrominance signal and the color burst signal in optimum conditions. That is, if the burst position signal BPS is a low level, as seen from the table 1, the same phase signal is output at the terminals PCR1 and PCR2. In contrast, when the burst position signal BPS is a high level, as seen from the table 2, a phase signal is output at only the terminal PCR1 and no signal is output at the terminal PCR2. Therefore, a level of a normal chrominance signal becomes twice the color burst signal, and therefore, the resistance value of the variable resistor 96 is adjusted such that the amplitude of the color burst signal and the amplitude of the PAL chrominance signal become equal to each other. Thus, the luminance signal, the PAL composite synchronization signal PALSYNC and the PAL chrominance signal are synthesized by the transistor 98 and output at the terminal 28 (Figure 1) through a level adjusting variable resistor 104.

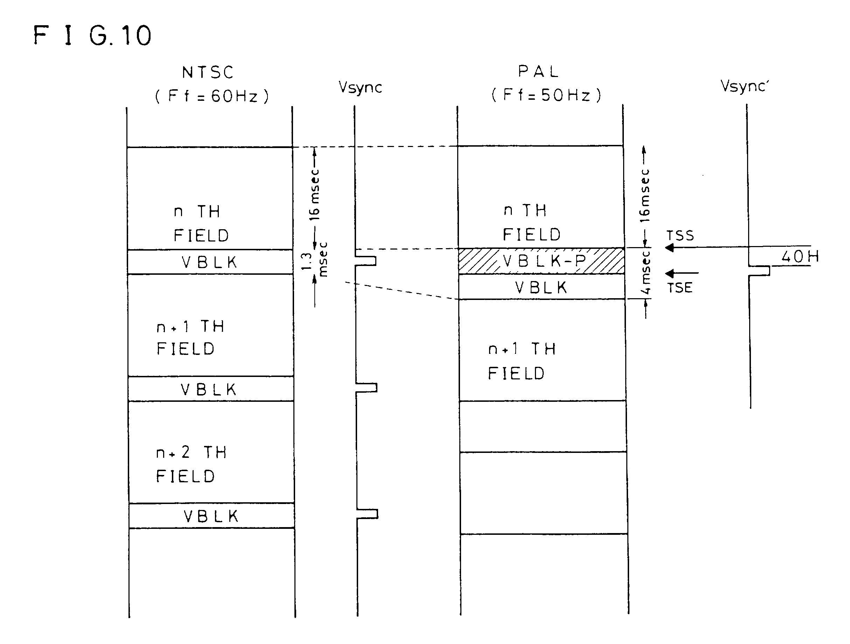

As mentioned above, the field frequency in the NTSC standard is 60 Hz and the field frequency in the PAL standard is 50 Hz. Therefore, in order to convert the NTSC color video signal of 60 Hz into the PAL color video signal of 50 Hz, as shown in Figure 10, it is necessary to forcedly set a vertical blanking period by stopping the PPU 16 (Figure 1) so that the PAL color video signal is not output during a time period corresponding to the difference between both the field periods.

More specifically, in the NTSC standard, as shown in Figure 10, one field period is approximately 17.3 msec in total of a displaying period of approximately 16 msec and a vertical blanking period VBLK of approximately 1.3 msec. In contrast, in a case of the PAL standard, one field period becomes approximately 20 msec; however, when the NTSC color video signal is converted into the PAL color video signal, a time of the above described displaying period is necessarily to be set at constant (approximately 16 msec). Therefore, as shown in Figure 10, it is necessary to set a vertical blanking period of approximately 4 msec in the case of the PAL standard. In this embodiment shown, in order to forcedly set a vertical blanking period VBLK-P of approximately 2.7 msec in addition to an original vertical blanking period VBLK (approximately 1.3 msec), a PPU clock signal PPUCLK is stopped by the PPU stop control circuit 42 (Figure 3) so that an operation of the PPU 16 (Figure 2) is stopped during that time. On the other hand, since the operation of the PPU16 is stopped during a clock stopped period, if the CPU 14 intends to access the PPU 16, the CPU 14 cannot access the PPU 16. Such a matter becomes an obstacle to a job of the CPU 14. Then, in this embodiment shown, the PPU clock stopped state is released when the CPU 14 intends to access the PPU 16 so that the CPU 14 can access the PPU 16 even if the PPU clock is stopped.

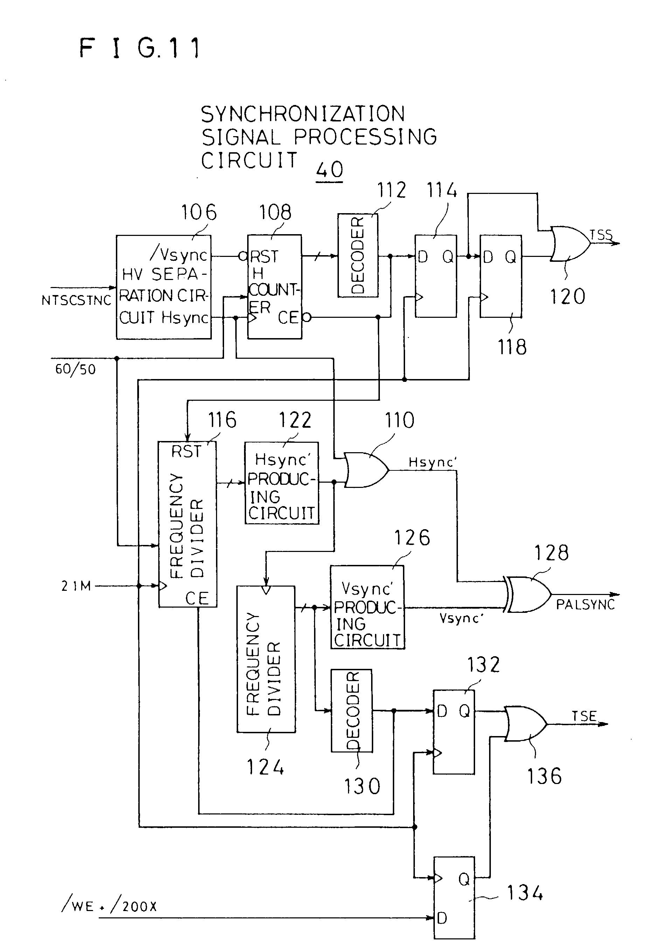

With reference to the Figure 11, the synchronization signal processing circuit 40 includes an HV separation circuit 106 which receives the composite synchronization signal NTSCSYNC (Hsync + Vsync) of the NTSC standard which is output from the synchronization signal separation circuit 36. The HV separation circuit 106 outputs the horizontal synchronization signal Hsync and the vertical synchronization signal/Vsync, respectively on the basis of the composite synchronization signal NTSCSYNC. The horizontal synchronization signal Hsync is applied to not only an H counter 108 as a clock therefor but also one input of an OR gate 110. The vertical synchronization signal /Vsync is applied to a reset input of the H counter 108. Therefore, the H counter 108 is reset every vertical synchronization signal /Vsync and counts the horizontal synchronization signal Hsync. An output of the H counter 108 is applied to a decoder 112. The decoder 112 outputs a signal becomes a high level when a count value of the H counter 108 reaches "256" that is corresponding to the displaying period of approximately 16 msec as shown in Figure 10. This signal is applied to not only the H counter 108 as a chip enable signal therefor but also a D input of a D flip-flop (D-FF) 114. The signal is further applied to a reset input of a frequency divider 116. An output of the D-FF 114 is applied to a D input of a D-FF 118 and one input of an OR gate 120. To the other input of the OR gate 120, an output of the D-FF 118 is applied. In addition, as a clock for each of the D-FF's 114 and 118, the clock signal 21M is applied as similar to D-FF's 132 and 134 (described later).

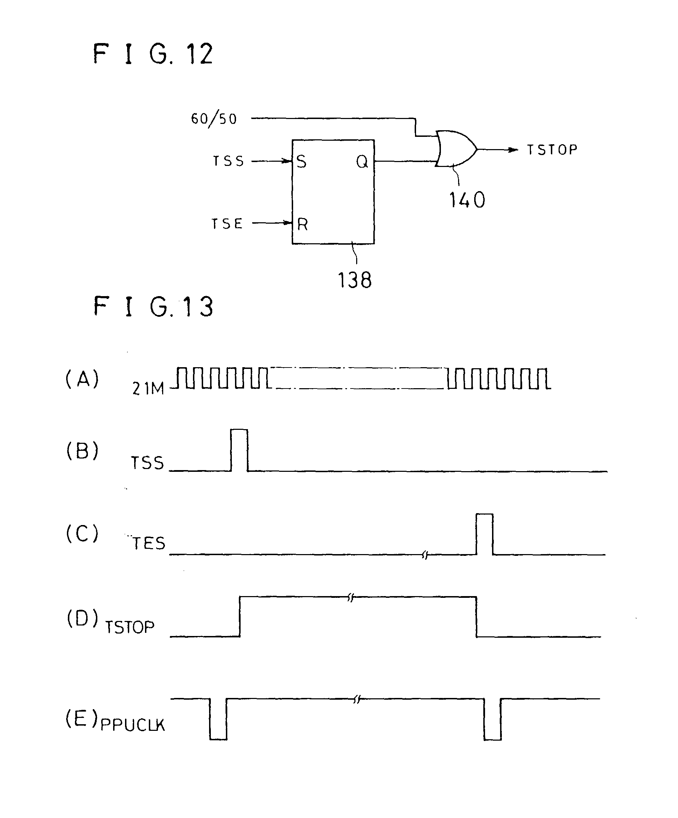

To the OR gate 120, a Q output of the D-FF 114 and a Q output of the D-FF 118 are thus input . On the other hand, when the H counter 108 counts "256", an output of the decoder 112 and thus a Q output of the decoder 114 becomes a high level, which is read in the decoder 118 in response to the clock signal 21M as shown in Figure 13(A). Therefore, as shown in Figure 13(B), a stop starting signal TSS is output at a timing when the H counter 108 counts "256", that is, a timing when the displaying period is terminated.

The clock signal 21M is also applied to a clock input of the afore mentioned frequency divider 116. The frequency divider 116 is composed of a 10-bit counter which divides the clock signal 21M at 1/1364. An output of the frequency divider 116 is applied to an Hsync' producing circuit 122. The Hsync' producing circuit 112 includes, although not shown, a decoder, a monostable multivibrator, and etc. The Hsync' producing circuit 112 outputs a horizontal synchronization signal HsyncB (not shown) during a period that the stop starting signal TSS is a high level at every timing when a count value of the frequency divider 116 becomes a predetermined value. The horizontal synchronization signal HsyncB is applied to not only the other input of the above described OR gate 110 and a frequency divider 126 as a clock therefor. Thus, since the original horizontal synchronization signal Hsync and the horizontal synchronization signal HsyncB are input to the OR gate 110, the original horizontal synchronization signal is replaced with a PAL horizontal synchronization signal Hsync' as a result of a logical sum.

The frequency divider 124 is composed of a 6-bit counter which counts the horizontal synchronization signal Hsync' and applies a count value thereof to a Vsync' producing circuit 126. The Vsync' producing circuit 126 includes a decoder, monostable multivibrator, and etc. as similar to the above described Hsync' producing circuit 112. The Vsync' producing circuit 126 outputs the vertical synchronization signal Vsync' for the PAL standard at every timing when an output of the frequency divider 124 becomes a predetermined value, "41", for example (see Figure 10). The vertical synchronization signal Vsync' from the Vsync' producing circuit 126 is input to an exclusive OR gate 128 together with the above described horizontal synchronization signal Hsync'. Therefore, from the exclusive OR gate 128, a composite synchronization signal PALSYNC (Vsync' + Hsync') for the PAL standard of 50 Hz is output which is applied in turn to the above described synchronization signal synthesizing circuit 50 (Figure 3 and Figure 9).

In addition, when the signal 60/50 from the CPU 14 is a high level, that is, when the field frequency of the PAL standard is 60 Hz, since the composite synchronization signal NTSCSYNC is not needed to be replaced with the composite synchronization signal PALSYNC, the above described H counter 108 and the frequency divider 116 are disabled, respectively.

The count value of the frequency divider 124 is also applied to a decoder 130 which outputs a signal which becomes a high level at every timing when the count value of the frequency divider 124 reaches a predetermined value, "51", for example. An output of the decoder 130 is applied to not only the frequency divider 116 as a chip enable signal therefor but also a D input of a D-FF 132. An output of the D-FF 132 is applied to an OR gate 136 together with an output of the D-FF 134. To a D input of the D-FF 134, the signals /WE and /200X from the CPU 14 (Figure 2) are applied. That is, a signal representing that the CPU 14 intends to access the PPU 16 is applied to the D-FF 134. Therefore, when the horizontal synchronization signal Hsync' of "51" are counted or when the CPU 114 accesses the PPU 16, a stop terminating signal TSE of a high level as shown in Figure 13(C) is output from the OR gate 136.

The stop starting signal TSS output from the OR gate 120 and the stop terminating signal TSE output from the OR gate 136 are applied to a set input S and a reset input R of an RS flip-flop (RS-FF) 138, respectively. A Q output of the RS-FF 138 is input to an OR gate 140 together with the signal 60/50 from the CPU 14. Therefore, as shown in Figure 13, the RS-FF 138 is set in response to the stop starting signal TSS and reset in response to the stop terminating signal TSS. Therefore, the Q output is a high level from the stop starting signal TSS to the stop terminating signal TSE as shown in Figure 13(D). Therefore, if the signal 60/50 is a low level, that is, in a case of a PAL of 50 Hz, a stop signal TSTOP as shown in Figure 13(D) is output from the OR gate 140, which functions as a clock stop signal of the PPU 16 as described above. Accordingly, the PPU clock PPUCLK from the PPU stop control circuit 42 (Figure 3) is not applied to the PPU 16 during a time period of the stop signal TSTOP as shown in Figure 13(E).

The above described stop terminating signal TSE may be output at a timing when the horizontal synchronization signal Hsync' of "51" are counted basically, but if the stop terminating signal TSE is not output as described above, the PPU clock PPUCLK remains in a stopped state. In this state, the CPU 14 cannot access the PPU 16. Therefore, in this embodiment shown, the Q output of the D-FF 134 is input to the OR gate 136. Accordingly, if the CPU 14 intends to access the PPU 16 before a timing when a predetermined number of horizontal synchronization signals Hsync' are counted, each of the signals /WE and /200X becomes a high level, and thus, the Q output of the D-FF 134 becomes a high level, and therefore, the stop terminating signal TSE is output from the OR gate 136.

The stop control circuit 42 shown in Figure 3 controls the stop and re-start of the PPU clock PPUCLK as described above, in the stopped period of the PPU clock PPUCLK, even if an interruption signal /IRQ is input thereto, the stop control circuit 42 always outputs a signal /IRQ' of a high level so that no interruption occurs in the PPU 16.

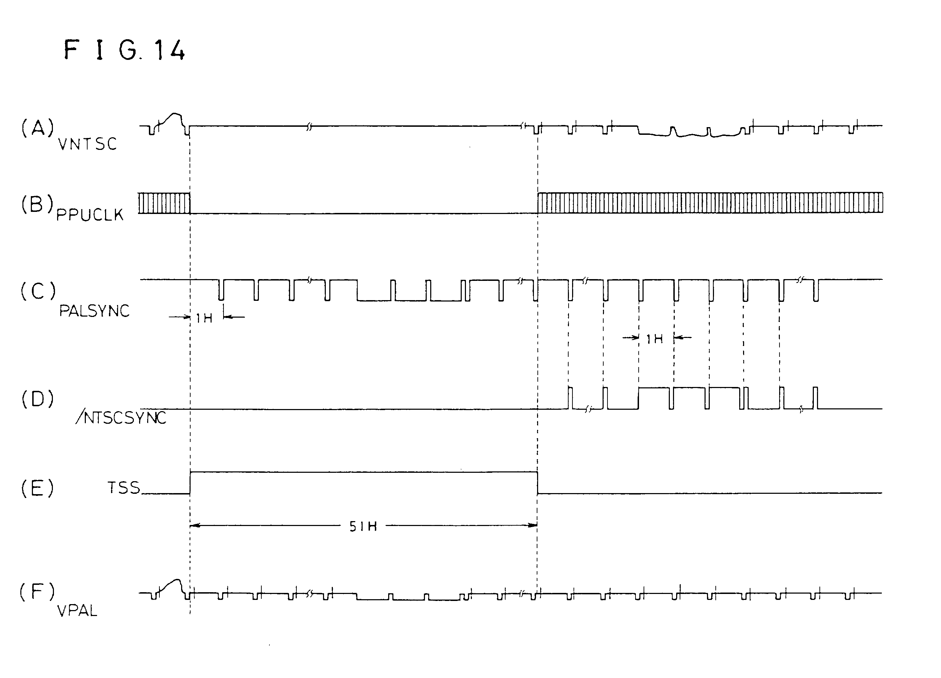

Thus, in the NTSC/PAL conversion device 26 as shown in Figure 3, as a whole, the NTSC color video signal as shown in Figure 14 is converted into the PAL color video signal. Figure 14(A) shows the NTSC composite color video signal VNTSC which is converted into the PAL composite color video signal VPAL as shown in Figure 14(F).

In addition, in the above described embodiments, a case where the NTSC composite color video signal is converted into the PAL composite color video signal was described. However, it will be easily understood that the present invention can be applied to a case where the NTSC composite color video signal is converted into a SECAM composite colour video signal. In such a case, a detector for changing a colour video signal of the SECAM standard to a PAL colour video signal is used and, an output of the detector may be applied to the input of the NTSC/PAL conversion device 26 as shown in Figure 3 instead of the NTSC colour video signal described in the embodiments.

Although the present invention has been described and illustrated in detail, it is clearly understood that the same is by way of illustration and example only and is not to be taken by way of limitation, the scope of the present invention being limited only by the terms of the appended claims.

## Claims

1. A colour video signal conversion apparatus which converts a first colour video signal in which a hue is dealt with as a phase of a first chrominance signal respect to a first colour burst signal into a second colour video signal in which a hue is dealt with as a phase of a second chrominance signal with respect to a second colour burst signal, said colour video signal conversion apparatus comprising:
first clock generating means for generating a first clock having a frequency which is an integer multiple of the burst frequency of said first chrominance signal included in said first colour video signal;
second clock generating means (46) for generating a second clock having a frequency which is an integer multiple of the burst frequency of said second chrominance signal included in said second colour video signal;
phase detecting means (52) for detecting a phase of said first chrominance signal with respect to said first colour burst signal included in said first colour video signal on the basis of said first clock to output a first colour code representing a detected phase;
code converting means (54) for converting said first colour code from said phase detecting means (52) into a second colour code for said second colour video signal; and
chrominance signal generating means (56) for generating said second chrominance signal of said second colour video signal on the basis of said second clock and said second colour code.

2. A colour video signal conversion apparatus according to claim 1, further comprising an output end to which said first colour video signal from first colour video signal generating means is input, said first colour video signal including a luminance signal, a synchronization signal and said first chrominance signal;
chrominance signal deriving means (38) for deriving said first chrominance signal from said first colour video signal input at said input end so as to apply to said phase detecting means.

3. A colour video signal conversion apparatus according to claim 2, wherein said phase detecting means (52) includes counter means which is reset in response to said first colour burst signal included in said first chrominance signal and counts said first clock.

4. A colour video signal conversion apparatus according to claim 3, wherein said counter means includes a first counter (64, 66) which is reset at a leading edge of said first colour burst signal and counts said first clock, and a second counter (68,70) which is reset at a trailing edge of said first colour burst signal and counts said first clock, and
said phase detecting means (52) includes output means for outputting a count value of said first counter as said first colour code in response to a first state of said first chrominance signal and for outputting a count value of said second counter as said first colour code in response to a second state of said first chrominance signal.

5. A colour video signal conversion apparatus according to claim 4, wherein said first counter includes first shift register means (64, 66) to which predetermined data is preset at a leading edge of said first colour burst signal, and
said second counter includes second shift register means (68, 70) to which predetermined data is preset at a trailing edge of said first colour burst signal.

6. A colour video signal conversion apparatus according to claim 5, wherein each of said first and second shift register means includes a first shift register which performs a shift operation in response to a leading edge of said first clock and a second shift register which performs a shift operation in response to a trailing edge of said first clock.

7. A colour video signal conversion apparatus according to any one of claims 2 through 6, wherein said chrominance signal deriving means (38) includes signal separating means for separating said first chrominance signal and said luminance signal from said first colour video signal, and said apparatus further comprising
synthesizing means (48) for synthesizing said second chrominance signal output from said chrominance signal generating means and said luminance signal.

8. A colour video signal conversion apparatus according to claim 7, further comprising synchronization signal synthesizing means (50) for synthesizing a synthesized signal output from said synthesizing means and a synthesizing means and a synchronization signal.

9. A colour video signal conversion apparatus according to claim 8, wherein said signal separating means separates a synchronization signal as well as said luminance signal from said first colour video signal, and said apparatus further comprising
synchronization signal generating means (40) for generating a further synchronization signal on the basis of said synchronization signal, wherein
said synchronization signal synthesizing means (50) synthesizes a synthesized signal output from said synthesizing means and said further synchronization signal.

10. A colour video signal conversion apparatus according to any one of claims 2 through 9, wherein said first colour video signal generating means includes a video game machine (10) for generating said first colour video signal for game in accordance with a program stored in advance in an external memory (20).

11. A colour video signal conversion apparatus according to any one of claims 1 through 10, wherein said first clock generating means generates said first clock having a frequency of N times said first chrominance signal included in said first colour video signal, and
said second clock generating means (46) generates said second clock having a frequency of N times said second chrominance signal included in said second colour video signal.

12. A colour video signal conversion apparatus according to claim 1 further comprising:
an input end for receiving said first colour video signal from first colour video signal generating means which generates said first colour video signal including a synchronization signal, first chrominance signal and luminance signal;
synchronization signal deriving means (36) for deriving said synchronization signal from said first colour video signal input to said input end;
chrominance signal deriving means (38) for deriving said first chrominance signal from said first colour video signal input to said input end;
chrominance signal converting means (34) for converting said first chrominance signal output from said chrominance signal deriving means (38) into a second chrominance signal which is to be included in a second colour video signal;
synchronization signal generating means (40) for generating a further synchronization signal which is to be included in said second colour video signal on the basis of said synchronization signal output from said synchronization signal deriving means (36);
synthesizing means (48) for synthesizing said further synchronization signal output from said synchronization signal generating means and said second chrominance signal output from said chrominance signal converting means; and
stopping means (42) for stopping said first colour video signal from said first colour video signal generating means from being input to said input end during a time period corresponding to a difference between a field period of said first colour video signal and a field period of said second colour video signal.

13. A colour video signal conversion apparatus according to claim 12, wherein said first colour video signal generating means includes a central processing unit (14) operating in accordance with a predetermined program and a picture processing unit (16) operating in response to a predetermined clock under the control of said central processing unit, and
said stopping means (42) including inhibiting means for inhibiting said predetermined clock from being applied to said picture processing unit (16).

14. A colour video signal conversion apparatus according to claim 13, wherein said stopping means (42) includes releasing means for releasing an inhibited state by said inhibiting means when said central processing unit (14) accesses said picture processing unit (16).

## Patentansprüche

1. Vorrichtung zum Konvertieren eines Farbvideosignals, die ein erstes Farbvideosignal, bei dem ein Farbton als Phase eines ersten Chrominanzsignals in bezug auf ein erstes Farbburstsignal behandelt wird, in ein zweites Farbvideosignal konvertiert, bei dem ein Farbton als eine Phase eines zweiten Chrominanzsignals in bezug auf ein zweites Farbburstsignal behandelt wird, wobei die genannte Vorrichtung zum Konvertieren des Farbvideosignals folgendes umfaßt:
ein erstes Taktgenerierungsmittel zum Generieren eines ersten Taktes mit einer Frequenz, die ein ganzzahliges Vielfaches der Burstfrequenz des genannten ersten Chrominanzsignals ist, das in dem genannten ersten Farbvideosignal enthalten ist;
ein zweites Taktgenerierungsmittel (46) zum Generieren eines zweiten Taktes mit einer Frequenz, die ein ganzzahliges Vielfaches der Burstfrequenz des genannten zweiten Chrominanzsignals ist, das in dem genannten zweiten Farbvideosignal enthalten ist;
ein Phasenerkennungsmittel (52) zum Erkennen einer Phase des genannten ersten Chrominanzsignals in bezug auf das genannte erste Farbburstsignal, das in dem genannten ersten Farbvideosignal enthalten ist, auf der Basis des genannten ersten Taktes, um einen ersten Farbcode auszugeben, der eine erkannte Phase repräsentiert;
ein Codekonvertierungsmittel (54) zum Konvertieren des genannten ersten Farbcodes von dem genannten Phasenerkennungsmittel (52) in einen zweiten Farbcode für das genannte zweite Farbvideosignal; und
ein Chrominanzsignal-Generierungsmittel (56) zum Generieren des genannten zweiten Chrominanzsignals des genannten zweiten Farbvideosignals auf der Basis des genannten zweiten Taktes und des genannten zweiten Farbcodes.

2. Vorrichtung zum Konvertieren eines Farbvideosignals nach Anspruch 1, ferner umfassend ein Ausgangsende, in das das genannte erste Farbvideosignal von dem genannten ersten Farbvideosignal-Generierungsmittel eingegeben wird, wobei das genannte erste Farbvideosignal ein Luminanzsignal, ein Synchronisationssignal und das genannte erste Chrominanzsignal enthält;
ein Chrominanzsignalableitungsmittel (38) zum Ableiten des genannten ersten Chrominanzsignals von dem genannten ersten Farbvideosignaleingang an dem genannten Eingangsende, um das genannte Phasenerkennungsmittel anzuwenden.

3. Vorrichtung zum Konvertieren eines Farbvideosignals nach Anspruch 2, bei dem das genannte Phasenerkennungsmittel (52) eine Zählvorrichtung beinhaltet, die in Reaktion auf das genannte, in dem genannten ersten Chrominanzsignal enthaltene erste Farbburstsignal zurückgesetzt wird und den genannten ersten Takt zählt.

4. Vorrichtung zum Konvertieren eines Farbvideosignals nach Anspruch 3, bei dem die genannte Zählvorrichtung einen ersten Zähler (64, 66), der an einer Vorderflanke des genannten ersten Farbburstsignals zurückgesetzt wird und den genannten ersten Takt zählt, und einen zweiten Zähler (68, 70) beinhaltet, der an einer Hinterflanke des genannten ersten Farbburstsignals zurückgesetzt wird und den genannten ersten Takt zählt, und
das genannte Phasenerkennungsmittel (52) ein Ausgangsmittel zum Ausgeben eines Zahlenwertes des genannten ersten Zählers als den genannten ersten Farbcode in Reaktion auf einen ersten Zustand des genannten ersten Chrominanzsignals und zum Ausgeben eines Zahlenwertes des genannten zweiten Zählers als den genannten ersten Farbcode in Reaktion auf einen zweiten Zustand des genannten ersten Chrominanzsignals beinhaltet.

5. Vorrichtung zum Konvertieren eines Farbvideosignals nach Anspruch 4, bei dem der genannte erste Zähler eine erste Schieberegistervorrichtung (64, 66) beinhaltet, auf der vorbestimmte Daten an einer Vorderflanke des genannten ersten Farbburstsignals voreingestellt werden, und
der genannte zweite Zähler eine zweite Schieberegistervorrichtung (68, 70) beinhaltet, auf der vorbestimmte Daten an einer Hinterflanke des genannten ersten Farbburstsignals voreingestellt werden.

6. Vorrichtung zum Konvertieren eines Farbvideosignals nach Anspruch 5, bei der die genannte erste und die genannte zweite Schieberegistervorrichtung ein erstes Schieberegister, das einen Schiebevorgang in Reaktion auf eine Vorderflanke des genannten ersten Taktes durchführt, und ein zweites Schieberegister beinhalten, das einen Schiebevorgang in Reaktion auf eine Hinterflanke des genannten ersten Taktes durchführt.

7. Vorrichtung zum Konvertieren eines Farbvideosignals nach einem der Ansprüche 2 bis 6, wobei das genannte Chrominanzsignalableitungsmittel (38) ein Signaltrennmittel zum Trennen des genannten ersten Chrominanzsignals und des genannten Luminanzsignals von dem genannten ersten Farbvideosignal beinhaltet, und wobei die genannte Vorrichtung ferner folgendes umfaßt:
ein Synthetisierungsmittel (48) zum Synthetisieren des genannten zweiten Chrominanzsignalausgangs von dem genannten Chrominanzsignal-Generierungsmittel und dem genannten Luminanzsignal.

8. Vorrichtung zum Konvertieren eines Farbvideosignals nach Anspruch 7, ferner umfassend ein Synchronisationssignal-Synthetisierungsmittel (50) zum Synthetisieren eines synthetisierten Signalausgangs von dem genannten Synthetisierungsmittel und ein Synthetisierungsmittel und ein Synchronisationssignal.

9. Vorrichtung zum Konvertieren eines Farbvideosignals nach Anspruch 8, bei dem das genannte Signaltrennmittel ein Synchronisationssignal sowie das genannte Luminanzsignal von dem genannten ersten Farbvideosignal trennt und die genannte Vorrichtung ferner folgendes umfaßt:
ein Synchronisationssignal-Generierungsmittel (40) zum Generieren eines weiteren Synchronisationssignals auf der Basis des genannten Synchronisationssignals, wobei
das genannte Synchronisationssignal-Synthetisierungsmittel (50) einen synthetisierten Signalausgang von dem genannten Synthetisierungsmittel und das genannte weitere Synchronisationssignal synthetisiert.

10. Vorrichtung zum Konvertieren eines Farbvideosignals nach einem der Ansprüche 2 bis 9, bei dem das genannte erste Farbvideosignal-Generierungsmittel eine Videospielmaschine (10) zum Generieren des genannten ersten Farbvideosignals für Spiele gemäß einem Programm beinhaltet, das zuvor in einem externen Speicher (20) gespeichert wurde.

11. Vorrichtung zum Konvertieren eines Farbvideosignals nach einem der Ansprüche 1 bis 10, bei dem das genannte erste Taktgenerierungsmittel den genannten ersten Takt mit einer Frequenz von N mal dem genannten ersten Chrominanzsignal generiert, der in dem genannten ersten Farbvideosignal enthalten ist, und
das genannte zweite Taktgenerierungsmittel (46) den genannten zweiten Takt mit einer Frequenz von N mal dem genannten zweiten Chrominanzsignal generiert, der in dem genannten zweiten Farbvideosignal enthalten ist.

12. Vorrichtung zum Konvertieren eines Farbvideosignals nach Anspruch 1, ferner umfassend:
ein Eingangsende zum Empfangen des genannten ersten Farbvideosignals von dem ersten Farbvideosignal-Generierungsmittel, das das genannte erste Farbvideosignal generiert, das ein Synchronisationssignal, das erste Chrominanzsignal und das Luminanzsignal beinhaltet;
ein Synchronisationssignalableitungsmittel (36) zum Ableiten des genannten Synchronisationssignals von dem genannten ersten Farbvideosignaleingang zu dem genannten Eingangsende;
ein Chrominanzsignalableitungsmittel (38) zum Ableiten des genannten ersten Chrominanzsignals von dem genannten ersten Farbvideosignaleinang zu dem genannten Eingangsende;
ein Chrominanzsignal-Konvertierungsmittel (34) zum Konvertieren des genannten ersten Chrominanzsignalausgangs von dem genannten Chrominanzsignalableitungsmittel (38) in ein zweites Chrominanzsignal, das in ein zweites Farbvideosignal integriert werden soll;
ein Synchronisationssignal-Generierungsmittel (40) zum Generieren eines weiteren Synchronisationssignals, das in das genannte zweite Farbvideosignal integriert werden soll, auf der Basis des genannten Synchronisationssignalausgangs von dem genannten Synchronisationssignal-Ableitungsmittel (36) ;
ein Synthetisierungsmittel (48) zum Synthetisieren des genannten weiteren Synchronisationssignalausgangs von dem genannten Synchronisationssignal-Generierungsmittel und des genannten zweiten Chrominanzsignalausgangs von dem genannten Chrominanzsignal-Konvertierungsmittel; und
ein Sperrmittel (42), um zu verhindern, daß das genannte erste Farbvideosignal von dem genannten ersten Farbvideosignal-Generierungsmittel während einer Zeitperiode in das genannte Eingangsende eingegeben wird, die einer Differenz zwischen einer Feldperiode des genannten ersten Farbvideosignals und einer Feldperiode des genannten zweiten Farbvideosignals entspricht.

13. Vorrichtung zum Konvertieren eines Farbvideosignals nach Anspruch 12, bei dem das genannte erste Farbvideosignal-Generierungsmittel eine Zentraleinheit (14), die gemäß einem vorbestimmten Programm arbeitet, und eine Bildverarbeitungseinheit (16) beinhaltet, die in Reaktion auf einen vorbestimmten Takt unter der Steuerung der genannten Zentraleinheit arbeitet, und
das genannte Sperrmittel (42) eine Sperre beinhaltet, um zu verhindern, daß der genannte vorbestimmte Takt an die genannte Bildverarbeitungseinheit (16) angelegt wird. 14. Vorrichtung zum Konvertieren eines Farbvideosignals nach Anspruch 13, bei der das genannte Sperrmittel (42) ein Freigabemittel beinhaltet, um einen durch die genannte Sperre bewirkten Zustand aufzuheben, wenn die genannte Zentraleinheit (14) auf die genannte Bildverarbeitungseinheit (16) zugreift.

## Revendications

1. Un dispositif de conversion de signaux vidéo couleur qui convertit un premier signal vidéo couleur dans lequel une teinte est traitée comme une phase d'un premier signal de chrominance relativement à un premier signal de salve chrominance en un second signal vidéo couleur relativement à un second signal de salve chrominance, ledit dispositif de conversion de signaux vidéo couleur comportant :
un premier moyen rythmeur qui génère un premier signal d'horloge dont la fréquence est un multiple entier de la fréquence de salve du dit premier signal de chrominance inclus dans ledit premier signal vidéo couleur;
un second moyen rythmeur (46) qui génère un second signal d'horloge dont la fréquence est un multiple entier du dit second signal de chrominance inclus dans ledit second signal vidéo couleur;
un moyen de détection de phase (52) pour détecter une phase du dit premier signal de chrominance relativement au dit premier signal de salve couleur inlus dans ledit premier signal vidéo couleur sur la base du dit premier signal d'horloge pour fournir un premier code couleur représentant une phase détectée;
un moyen de conversion de code (54) pour convertir ledit premier code couleur fourni par ledit moyen de détection de phase (52) en un second code couleur pour ledit second signal vidéo couleur; et
un moyen de génération de signaux de chrominance (56) pour générer ledit second signal de chrominance du dit second signal vidéo couleur sur la base du dit second signal d'horloge et du dit second code couleur.

2. Un dispositif de conversion de signaux vidéo couleur selon la revendication 1, qui comprend de plus une extrémité de sortie qu'attaque ledit premier signal vidéo couleur fourni par le premier moyen de génération de signaux vidéo couleur, ledit premier signal vidéo couleur incluant un signal de luminance, un signal de synchronisation et ledit premier signal de chrominance;
un moyen d'extraction (38) de signaux de chrominance pour extraire ledit premier signal de chrominance du dit premier signal vidéo couleur fourni à ladite extrémité d'entrée pour l'injection dans ledit moyen de détection de phase.

3. Un dispositif de conversion de signaux vidéo couleur selon la revendication 2, dans lequel ledit moyen de détection de phase (52) inclut un moyen de comptage qui est remis à zéro en réponse au dit premier signal de salve chrominance inclus dans ledit premier signal de chrominance et qui compte lesdits premiers signaux d'horloge.

4. Un dispositif de conversion de signaux vidéo couleur selon la revendication 3, dans lequel ledit moyen de comptage inclut un premier compteur (64,66) qui est remis à zéro à un flanc avant du dit premier signal de salve couleur et compte lesdits premiers signaux d'horloge, et un second compteur (68,70) qui est remis à zéro à un flanc arrière du dit premier signal de salve couleur et qui compte lesdits premiers signaux d'horloge, et
ledit moyen de détection de phase (52) comporte un moyen de sortie pour fournir une valeur de comptage du dit premier compteur sous forme du dit premier code couleur en réponse à un premier état du dit premier signal de chrominance et pour fournir une valeur de comptage du dit second compteur sous forme du dit premier code couleur en réponse à un second état du dit premier signal de chrominance.

5. Un dispositif de conversion de signaux vidéo couleur selon la revendication 4, dans lequel ledit premier compteur inclut un moyen à registres à décalage (64,66) sur lequel des données prédéterminées sont préréglées à un flanc avant du dit premier signal de salve couleur, et
ledit second compteur inclut un second moyen à registres à décalage (68,70) sur lequel des données prédéterminées sont préréglées à un flanc arrière du dit premier signal de salve couleur.

6. Un dispositif de conversion de signaux vidéo couleur selon la revendication 5, dans lequel chacun des moyens à registres à décalage inclut un premier registre à décalage qui effectue un décalage en réponse à un front avant du dit premier signal d'horloge et un second registre à décalage qui effectue un décalage en réponse à un flanc arrière du dit premier signal d'horloge.

7. Un dispositif de conversion de signaux vidéo couleur selon l'une quelconque des renvendications 2 à 6, dans lequel ledit moyen d'extraction de signaux de chrominance (38) inclut un moyen de séparation de signaux pour séparer ledit premier signal de chrominance et ledit signal de luminance du dit premier signal vidéo couleur, et ledit dispositif comporte de plus
un moyen synthétiseur (48) pour synthétiser ledit second signal de chrominance fourni par ledit moyen de génération de signaux de chrominance et ledit signal de luminance.

8. Un dispositif de conversion de signaux vidéo couleur selon la revendication 7, qui comprend de plus un moyen de synthétisation (50) de signaux de synchronisation pour synthétiser un signal synthétisé fourni par ledit moyen de synthétisation et un moyen de synthétisation et un signal de synchronisation.

9. Un dispositif de conversion de signaux vidéo couleur selon la renvendication 8, dans lequel ledit moyen séparateur de signaux sépare du dit premier signal vidéo couleur un signal de synchronisation en plus du dit signal de luminance, et ledit dispositif comporte également
un moyen de génération (40) de signaux de synchronisation pour générer un autre signal de synchronisation sur la base du dit signal de synchronisation, dans lequel
ledit moyen de synthétisation (50) de signaux de synchronisation synthétise un signal synthétisé fourni par ledit moyen de synthétisation et ledit autre signal de synchronisation.

10. Un dispositif de conversion de signaux vidéo couleur selon l'une quelconque des revendications 2 à 9, dans lequel ledit premier moyen de génération de signaux vidéo couleur inclut une machine à jeux vidéo (10) pour générer ledit premier signal vidéo couleur pour jeux conformément à un programme préalablement stocké dans une mémoire externe (20).

11. Un dispositif de conversion de signaux vidéo couleur selon l'une quelconque des revendications 1 à 10, dans lequel ledit premier moyen rythmeur génère ledit premier signal d'horloge dont la fréquence égale N fois celle du dit premier signal de chrominance inclus dans ledit premier signal vidéo couleur, et
ledit second rythmeur (46) génère ledit second signal d'horloge dont la fréquence égale N fois celle du dit second signal de chrominance inclus dans ledit second signal vidéo couleur.

12. Un dispositif de conversion de signaux vidéo couleur selon la revendication 1 qui comporte de plus :
une extrémité d'entrée pour la réception du dit premier signal vidéo couleur fourni par le premier moyen de génération de signaux vidéo couleur qui génère ledit premier signal vidéo couleur incluant un signal de synchronisation, un premier signal de chrominance et un signal de luminance;
un moyen d'extraction de signaux de synchronisation (36) pour extraire ledit signal de synchronisation fourni par ladite première entrée de signaux vidéo couleur à ladite extrémité d'entrée;
un moyen d'extraction de signaux de chrominance (38) pour extraire ledit premier signal de chrominance fourni par ladite entrée de signaux vidéo couleur à ladite extrémité d'entrée;
un moyen de conversion de signaux de chrominance (34) pour convertir ladite première sortie de signaux de chrominance fourni par ledit moyen d'extraction de signaux de chrominance (38) en un second signal de chrominance qui va être inclus dans un second signal vidéo couleur;
un moyen de génération de signaux de synchronisation (40) pour générer un autre signal de synchronisation qui va être inclus dans ledit second signal vidéo couleur sur la base du dit signal de synchronisation fourni par ledit moyen d'extraction de signaux de synchronisation (36) ;
un moyen de synthétisation (48) pour synthétiser ledit autre signal de synchronisation fourni par ledit moyen de génération de signaux de synchronisation et ledit second signal de chrominance fourni par ledit moyen de conversion de signaux de chrominance; et
un moyen d'arrêt (42) pour empêcher ledit premier signal vidéo couleur fourni par ledit premier moyen de génération de signaux vidéo couleur d'attaquer ladite première entrée pendant une période de temps qui correspond à une différence entre une période de trame du dit premier signal vidéo couleur et une période de trame du dit second signal vidéo couleur.

13. Un dispositif de conversion de signaux vidéo couleur selon la renvendication 12, dans lequel le premier moyen de génération de signaux vidéo couleur inclut un processeur central (14) qui fonctionne conformément à un programme prédéterminé et un processeur d'images (16) qui fonctionne en réponse à un signal d'horloge prédéterminé sous la commande du dit processeur central, et
ledit moyen d'arrêt (42) inclut un moyen inhibiteur qui empêche l'application du dit signal d'horloge prédéterminé au dit processeur d'images (16).

14. Un dispositif de conversion de signaux vidéo couleur selon la revendication 13, dans lequel ledit moyen d'arrêt (42) inclut un moyen de libération d'un état inhibé par ledit moyen d'inhibition quand ledit processeur central (14) sollicite ledit processeur d'images (16)
